# EUROPEAN PATENT APPLICATION

(11) **EP 4 611 055 A1**
(43) Date of publication of application: **03.09.2025**
(21) Application number: 23882814.9
(22) Date of filing: 23.06.2023
(51) Int. Cl.: H01M 4/133, H01M 4/134, H01M 4/62, H01M 10/052, H01M 10/0562, H01M 4/02

(54) **ALL-SOLID-STATE BATTERY**

(30) Priority: 24.10.2022 KR 20220137576
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); LEE, Jungho, Yongin-si, Gyeonggi-do 17084 (KR); SOHN, Juhee, Yongin-si, Gyeonggi-do 17084 (KR); SHIN, Hyuksoo, Yongin-si, Gyeonggi-do 17084 (KR); LEE, Kang Hee, Yongin-si, Gyeonggi-do 17084 (KR); JUNG, Sungwon, Yongin-si, Gyeonggi-do 17084 (KR)
(74) Representative: Gulde & Partner
(86) International application number: PCT/KR2023/008795
(87) International publication number: WO 2024/090706

(57) **Abstract**

The present invention relates to an all solid-state battery, which comprises a cathode including a cathode active material layer containing a cathode active material, an anode including an anode catalyst layer containing an anode catalyst and Nb₂O₅ and an electrolyte, wherein the anode catalyst layer contains Nb₂O₅ at a content of 1 wt% to 30 wt% on the basis of a total of, 100 weight% of the anode catalyst layer and the ratio (N/P) of a capacity of the anode catalyst layer to that of the cathode is between 0.1 (inclusive) and 0.5 (exclusive).

## Description

### TECHNICAL FIELD

Embodiments relate to all solid-state battery.

### BACKGROUND ART

Recently, with the rapid spread of electronic devices such as mobile phones, laptop computers, and electric vehicles using batteries, the demand for small, lightweight, and relatively high-capacity rechargeable batteries is rapidly increasing. Particularly, a rechargeable lithium battery has recently drawn attention as a driving power source for portable devices, as it has lighter weight and high energy density. Thus, research for improving performances of rechargeable lithium is being actively studied.

Among rechargeable lithium batteries, the term all solid-state battery refers to a battery in which all materials are solid, and the all solid-state battery may be a battery using a solid electrolyte. The solid electrolyte may be positioned between the cathode and the anode, thereby preventing direct contact between the cathode and the anode, and simultaneously, the solid electrolyte may serve as a passage for the movement of lithium ions during charge and discharge.

### DETAILED DESCRIPTION OF THE INVENTION

### TECHNICAL PROBLEM

One embodiment provides an all solid-state battery exhibiting excellent electrochemical performances.

### TECHNICAL SOLUTION

Embodiments may provide an all solid-state battery including a cathode active material layer that includes a cathode active material, an anode including an anode catalyst layer including an anode catalyst and Nb₂O₅; and an electrolyte, wherein an amount of Nb₂O₅ is 1 wt% to 30 wt% based on the total, 100 wt% of the anode catalyst layer and a ratio (N/P) of capacity of the anode catalyst layer relative to capacity of the cathode is 0.1 or more and less than 0.5.

The amount of Nb₂O₅ may be 3 wt% to 30 wt% or 5 wt% to 15 wt% based on the total, 100 wt% of the anode catalyst layer.

The ratio (N/P) of the capacity of the anode catalyst layer relative to the capacity of the cathode may be 0.1 to 0.4, or 0.1 to 0.3.

The anode catalyst may be a carbon-based material, metal particles, or combinations thereof.

The carbon-based material may be amorphous carbon.

The metal particle may be at least one selected from Ag, Zn, Al, Sn, Mg, Ge, Cu, In, Ni, Bi, Au, Si, Pt, Pd, and combinations thereof.

The electrolyte may be a solid electrolyte. The solid electrolyte may be a sulfide-based solid electrolyte, an oxide-based solid electrolyte, a halide-based solid electrolyte, or a solid polymer electrolyte.

The anode may further include a current collector supporting the anode catalyst layer, and may further include a lithium deposition layer formed between the current collector and the anode catalyst layer during an initial charging.

The cathode active material may be an active material that is capable of reversibly intercalating and deintercalating lithium ions or a sulfur-based compound. In some embodiment, the cathode active material may be the active material that is capable of reversibly intercalating and deintercalating lithium ions.

### ADVANTAGEOUS EFFECTS

An all solid-state battery according to an embodiment may exhibit improved ionic conductivity and high rate capability.

### BRIEF DESCRIPTION OF THE DRAWINGS

FIG. 1 is a schematic cross-sectional view of the all solid-state battery according to one embodiment.
FIG. 2 is a schematic cross-sectional view illustrating state of the all solid-state battery after charging according to one embodiment.
FIG. 3 is a SEM image of the surface of the anode according to Example 1.
FIG. 4 is a graph showing the EDAX result for the anode of Example 1.
FIG. 5 is image showing the SEM image of FIG. 3 magnified 20, 000 times.
FIG. 6 is a graph showing the EDAX results for the selected area 1 and the selected area of FIG. 5.

### BEST MODE FOR PERFORMING INVENTION

Hereinafter, embodiments of the present invention will be described in detail. However, these embodiments are merely examples, the present invention is not limited thereto, and the present invention is defined by the scope of claims.

It will also be understood that when a layer or element is referred to as being "on" another layer or substrate, it may be directly on the other layer or substrate, or intervening layers may also be present.

In the embodiments, the terms "particle size" or "a particle diameter" may refer to an average particle diameter. The term "average particle diameter" may refer to an average particle diameter (D50) where a cumulative volume is 50 volume% in a particle size distribution. The average particle diameter may be measured by a method well known to those skilled in the art, for example, by a particle size analyzer, or by a transmission electron microscopic image, or a scanning electron microscopic image. The laser diffraction may be obtained by distributing particles to be measured in a distribution solvent and introducing the distributed particles to a commercially available laser diffraction particle measuring device (e.g., MT 3000 available from Microtrac, Ltd.), irradiating ultrasonic waves of 28 kHz at a power of 60 W, and calculating an average particle diameter (D50) in the 50 % standard of particle distribution in the measuring device.

An all solid-state battery according to embodiments may include a cathode, an anode, and an electrolyte, wherein the anode may include an anode active material layer including an anode catalyst and Nb₂O₅, and aA ratio (N/P) of a capacity of the anode catalyst layer relative to a capacity of the cathode may be 0.1 or more, and less than 0.5.

In some embodiments, the term anode including the anode catalyst layer may refer to a deposition-type anode, and such a deposition-type anode may not include an anode active material in a preparation of the battery assembly, but instead, lithium metal may be deposited to serve as the anode active material during charging of the battery. To explain this in more detail, during the charging of an all solid-state battery, lithium ions may be released from a cathode active material and may pass through the solid electrolyte to move to the anode, and thus, the lithium ions may be deposited on the anode current collector to form a lithium deposition layer between the current collector and an anode layer, and the anode with the lithium deposition layer is called the deposition-layer anode.

The anode according to some embodiment may include Nb₂O₅ in the anode catalyst layer. Nb₂O₅ is a lithiophilic material and may be converted to LiₓNb₂O₃ during charging which, as a result, may operate as a pseudocapacitor) to distribute or to reserve lithium. Therefore, the ionic conductivity characteristic of the anode may be improved.

Such effects may be realized by using Nb₂O₅ in the anode of the battery having a ratio (N/P, hereinafter, referred to as "N/P" ratio) of 0.1 or more, and less than 0.5 of a capacity of the anode catalyst layer relative to a capacity of the cathode and using the Nb₂O₅ in an amount of 1 wt% to 30 wt% based on a total of 100 wt% of the anode catalyst layer.

In some embodiments, the N/P ratio does not indicate a ratio of a capacity of an anode relative to a capacity of a cathode defined in the general lithium ion secondary battery, but instead indicates a ratio of a capacity of the anode catalyst layer relative to a capacity of the cathode. Herein, the term capacity refers to a charge capacity. The capacity of the anode catalyst layer may be obtained from a charge, in some embodiments, a charge capacity by lithium ions, if the lithium ions are moved to the anode during charging to present the lithium ions in the anode catalyst layer.

In some embodiment, the capacity of the anode catalyst layer may be obtained by charging a half-cell including the anode and a lithium counter electrode at 0.01 C to 0.1 C once to measure a capacity up to the inflection point near 0 mV (vs. Li). The capacity of the cathode may be obtained from a theoretical capacity of a cathode active material.

If the anode catalyst layer were to include Nb₂O₅, in an amount less than 1 wt%, this amount may be insufficient to provide the effects obtained by using Nb₂O₅ in the range indicated above. More than 30 wt% of Nb₂O₅ may create severe shortcomings due to the high irreversible capacity and low electrical conductivity of Nb₂O₅.

Even if the amount of Nb₂O₅ were to be within the above range, the desired effects may be not achieved, if the Nb₂O₅ is used in a battery having an N/P ratio out of the range of 0.1 or more and less than 0.5. If Nb₂O₅ is used in a battery having the N/P ratio of less than 0.1, the, anode catalyst layer may not function properly, and lithium may be non-uniformly grown. If Nb₂O₅ is used in a battery having the N/P ratio of 0.5 or more, too much lithium may be absorbed in the anode catalyst layer and thus, an irreversible capacity may occur due to dead lithium that does not participate in the charge and discharge reaction. The increases in the N/P ratio of the battery may cause an increase in the thickness of the anode. In the all solid-state battery according to some embodiment, the anode may not include any solid electrolyte, which lithium ionic conductivity to be low, and thus, increases in the thickness of the anode may not readily allow for charging and discharging, thereby exhibiting no objective effects.

If the N/P ratio is less than 1, a deposition-type anode may result in which lithium ions moved to the anode during charge reacts as LiCx (where x=1 to 6) (during the initial charge, a capacity up to 0 V (vs. Li/Li+)) and the unreacted and residual ions are deposited between the anode catalyst layer and the current collector. In some embodiments, if the maximum value of the N/P ration is less than 0.5, the battery may be regarded as a battery in which an amount of lithium deposited on a surface of the anode may be larger than the general deposition-type anode.

In some embodiments, an amount of Nb₂O₅ may be 1 wt% to 30 wt%, 3 wt% to 30 wt%, 3 wt% to 20 wt%, 5 wt% to 15 wt%, 5 wt% to 10 wt% based on the total, 100 wt% of the anode catalyst layer.

In some embodiments, the N/P ratio may be 0.1 or more, and less than 0.5, 0.1 to 0.4, or 0.1 to 0.3, or 0.1 to 0.2.

The anode catalyst layer may include a carbon-based material, metal particles, or combinations thereof, as the anode catalyst. If the all solid battery according to an embodiment is charged, lithium ions may be released from a cathode active material and may pass through the solid electrolyte to move to the anode, and thus, is the lithium ions may be deposited on the anode current collector to form a lithium deposition layer. The carbon-based material may be a sp3-rich carbon-based material that is favorable for deposition. For example, the carbon-based material may be carbon black, acetylene black, denka black, ketjen black, furnace black, activated carbon, graphene, or combinations thereof. The carbon black may be Super P (available from Timcal, Ltd.) The amorphous carbon is not limited thereto, and any available material that may be classified as amorphous carbon may be used.

The amorphous carbon may include single particles, a secondary particle in which primary particles are agglomerated, or combinations thereof.

The single particles may have a particle diameter of 10 nm to 60 µm. In other embodiments, a particle diameter of the primary particles may be 20 nm to 100 nm, and a particle diameter of the secondary particle may be 1 µm to 20 µm.

In some embodiments, a particle diameter of the primary particles may be 20 nm or more, 30 nm or more, 40 nm or more, 50 nm or more, 60 nm or more, 70 nm or more, 80 nm or more, or 90 nm or more, and 100 nm or less, 90 nm or less, 80 nm or less, 70 nm or less, 60 nm or less, 50 nm or less, 40 nm or less, or 30 nm or less.

In some embodiments, a particle diameter of the secondary particle may be 1 µm or more, 3 µm or more, 5 µm or more, 7 µm or more, 10 µm or more, or 15 µm or more, and 20 µm or less, 15 µm or less, 10 µm or less, 7 µm or less, 5 µm or less, or 3 µm or less.

The shape of the primary particle may be spherical, oval, plate-shaped, or combinations thereof. In some embodiments, the shape of the primary particle may be spherical, oval, or combinations thereof.

The metal nanoparticle may be Ag, Zn, Al, Sn, Mg, Ge, Cu, In, Ni, Bi, Au, Si, Pt, Pd, and combinations thereof., In some embodiments, the metal nanoparticle may be Ag. The inclusion of the metal nanoparticles in the anode catalyst layer may further improve the electrical conductivity of the anode.

The metal particle may have a size of 5 nm to 800 nm. The size of the metal particle may be 5 nm or more, 50 nm or more, 100 nm or more, 150 nm or more, 200 nm or more, 250 nm or more, 300 nm or more, 350 nm or more, 400 nm or more, 450 nm or more, 500 nm or more, 550 nm or more, 600 nm or more, 650 nm or more, 700 nm or more, or 750 nm or more. The size of the metal particle may be 800 nm or less, 750 nm or less, 700 nm or less, 650 nm or less, 600 nm or less, 550 nm or less, 500 nm or less, 450 nm or less, 400 nm or less, 350 nm or less, 300nm or less, 250 nm or less, 200 nm or less, 150 nm or less, 100 nm or less, or 50 nm or less. If the size of the metal particle is within the above range battery characteristics, (for example, cycle-life characteristics) of the all solid-state battery, may be improved.

If the anode catalyst layer includes the carbon-based material and the metal particles, a mixing ratio of the carbon-based material and the metal particles may be 1:1 to 99:1 by weight ratio. For example, an amount of the carbon-based material may be, based on the metal particle, 1 or more, 2 or more, 3 or more, 4 or more, 5 or more, 10 or more, 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more or 95 or more, and 99 or less, 95 or less, 90 or less, 85 or less, 80 or less, 75 or less, 70 or less, 65 or less, 60 or less, 55 or less, 50 or less, 45 or less, 40 or less, 35 or less, 30 or less, 25 or less, 20 or less, 15 or less, 10 or less, 5 or less, 4 or less, 3 or less or 2 or less. For example, the weight ratio of the carbon-based material and the metal particles may be 1:1 to 5:1, 1:1 to 10:1, 1:1 to 20:1, 1:1 to 25:1, 1:1 to 30:1, 1:1 to 40:1, 1:1 to 50:1, 1:1 to 60:1, 1:1 to 70:1, 1:1 to 80:1, or 1:1 to 90:1. If weight ratio of the carbon-based material and the metal particles is within the range, the electrical conductivity of the anode may be more improved.

The carbon-based material, metal particles, or combinations thereof may be present in an amount of 50 wt% to 98 wt%, or 60 wt% to 90 wt% based on the total weight of the anode catalyst layer.

The anode catalyst layer may include a binder and may further include a conductive material.

The binder may be, for example, a styrene butadiene rubber (SBR), polytetrafluoroethylene, polyvinylidene fluoride, polyethylene, a vinylidenefluoride/hexafluoropropylene copolymer, polyacrylonitrile, polymethylmethacrylate, carboxymethyl cellulose, hydroxypropyl cellulose, diacetyl cellulose, or combinations thereof. The carboxymethyl cellulose, hydroxypropyl cellulose, diacetyl cellulose may be alkali metals thereof, and the alkali metal may be Na or Li. As non-limiting examples, any available binder may be used as a binder in the related art.

An amount of the binder may be, based on the total weight of each component of the anode for the all solid-state battery, or the total weight of the anode catalyst layer, 0.1 wt% to 30 wt%, or 0.1 wt% to 10 wt%. The binder within the above range may sufficiently exhibit the adherence without deteriorating the battery performances.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, carbon fiber, carbon nanofiber, carbon nanotube, and the like; a metal-based material of a metal powder or a metal fiber including copper, nickel, aluminum, silver, and the like; a conductive polymer such as polyphenylene derivatives; or mixtures thereof.

The conductive material may be included in an amount of 0.1 wt% to 15 wt%, or 0.1 wt% to 10 wt% based on the total weight of each component of the anode for the all solid-state battery, or the total weight of the anode catalyst layer. The conductive material within the above range may sufficiently exhibit the electrical conductivity without deteriorating the battery performances.

The anode may further include a current collector supporting the anode catalyst layer. The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

The anode catalyst layer may further include, for example, additives such as a filler, a dispersing agent, an ionic conductive material, and the like. As the filler, the dispersing agent, the ionic conductive material included in the anode catalyst layer, a generally used for the all solid-state battery may be used.

The cathode may include a cathode active material layer including a cathode active material and a current collector supporting the cathode active material layer.

The cathode active material may include compounds that reversibly intercalate and deintercalate lithium ions. For example, the cathode active material may include one or more composite oxides of a metal selected from cobalt, manganese, nickel, and a combination thereof, and lithium. The examples of the cathode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90 ≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90 ≤a≤1.8, 0 ≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₑO₂ (0.90≤a≤1.8, 0≤b≤0.9, 0≤c≤0.5, 0≤d ≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); Li^{a}MnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI₁O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulae, A is selected from Ni, Co, Mn, or combinations thereof; B¹ is selected from Al, Ni, Co, Mn, Cr, Fe, Mg, Sr, V, a rare earth element, or combinations thereof; D¹ is selected from O, F, S, P, or combinations thereof; E is selected from Co, Mn, or combinations thereof; F¹ is selected from F, S, P, or combinations thereof; G is selected from Al, Cr, Mn, Fe, Mg, La, Ce, Sr, V, or combinations thereof; Q is selected from Ti, Mo, Mn, or combinations thereof; I¹ is selected from Cr, V, Fe, Sc, Y, or combinations thereof; J is selected from V, Cr, Mn, Co, Ni, Cu, or combinations thereof.

According to some embodiments, the cathode active material may be a three-component-based lithium transition metal oxide such as LiNiₓCo_{y}Al_{z}O₂ (NCA), LiNiₓCo_{y}Mn_{z}O₂ (NCM) (wherein, 0<x<1, 0<y<1, 0<z<1, x+y+z=1), etc.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixture thereof. The coating layer may be provided by a method having no (or substantially no) adverse influence on properties of a cathode active material by using these elements in the compound, and for example, the method may include any suitable coating method such as spray coating, dipping, and/or the like, but is not illustrated in more detail because it should be readily recognizable to those of ordinary skill in the art upon reviewing the present disclosure.

Furthermore, the coating layer may be any coating materials that are known as a coating layer for the cathode active material of the all-solid state battery. For example, the coating material may be Li₂O-ZrO₂ (LZO), and the like.

The shape of the cathode active material may be, for example, a particle shape such as a spherical shape or an oval spherical shape, and the average particle diameter of the cathode active material may not be limited, and may be in any range that can be applied to a cathode active material of a conventional all solid-state secondary battery. The amount of the cathode active material included in the cathode active material may not be limited, and may be in any range that may be applied to a cathode active material of the conventional all solid-state secondary battery.

In some embodiments, the cathode active material may be included in an amount of amount of 55 wt% to 99.7 wt%, or for example, 74 wt% to 89.8 wt% based on the total weight of the cathode active material layer. If the cathode active material is included within the range, the capacity of the all-solid-state battery may be maximized and the cycle-life characteristics may be improved.

The cathode active material layer may include a solid electrolyte. The solid electrolyte may be an inorganic solid electrolyte such as a sulfide-based solid electrolyte, an oxide-based solid electrolyte, or a solid polymer electrolyte.

The sulfide-based solid electrolyte may be, for example, Li₂S-P₂S₅, Li₂S-P₂S₅-LiX (where X is an halogen element, for example, I, or Cl), Li₂S-P₂S₅-Li₂O, Li₂S-P₂S₃-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each an integer, Z is Ge, Zn or Ga), Li2S-GeS2, Li₂S-SiS₂-Li₃PO₄, Li₂S-SiS₂-LiₚMO_{q} (where p and q are each an integer, and M is P, Si, Ge, B, Al, Ga, or In), or the like.

The sulfide-based solid electrolyte may be prepared, for example, by mixing Li₂S and P₂S₅ at a mole ratio of 50 : 50 to 90 : 10, or 50 : 50 to 80 : 20. In the mixing ratio, a sulfide-based solid electrolyte exhibiting excellent ionic conductivity may be prepared. As other components, SiS₂, GeS₂, B₂S₃, or the like may be further included thereto, thereby further improving ionic conductivity. The mixing procedure may be performed by mechanical milling or by a solution method. The mechanical milling may be performed by adding starting sources, a ball mill, or the like, in a reactor and vigorously stirring to pulverize the starting sources and mix them together. The solution method may provide a solid electrolyte as a precipitate by mixing starting sources in a solvent. After mixing, an additional sintering procedure may be performed. The crystal of the solid electrolyte may be further solidified by performing addition sintering.

For example, the solid electrolyte may be an argyrodite-type sulfide-based solid electrolyte. The sulfide-based solid electrolyte may be, for example, LiₐM_{b}P_{c}S_{d}Aₑ (where a, b, c, d and e are all 0 or more and 12 or less, M is Ge, Sn, Si, or combinations thereof, and A is one of F, Cl, Br, or I), and in another embodiment, may be Li₃PS₄, Li₇P₃S₁₁, Li₆PS₅Cl, Li₆PS₅Br, Li₆PS₅I, or the like.

The sulfide-based solid electrolyte may be amorphous, crystalline, or a combination thereof.

The oxide-based inorganic solid electrolyte may be, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}PO₄)₃, 0<x<2, 0<y<3), Li_{1+x+y}(Al, Ga)ₓ(Ti, Ge)₂₋ₓSi_{y}P_{3-y}O₁₂ (0≤X≤1, 0≤y≤1), lithium lanthanum titanate (LiₓLa_{y}TiO₃, 0<x<2, 0<y<3), Li₂O, LiAlO₂, Li₂OAl₂O₃-SiO₂-P₂O₅-TiO₂-GeO₂ ceramics, Garnet-based ceramics Li₃₊ₓLa₃M₂O₁₂ (M= Te, Nb, or Zr; x is an integer of 1 to 10), or mixtures thereof.

The solid polymer electrolyte may be, for example, at least one of polyethylene oxide, poly(diallyldimethyl ammonium)TFSI), Cu₃N, Li₃N, LiPON, Li₃PO₄.Li₂S.SiS₂, Li₂S.GeS₂.Ga₂S₃, Li₂O.11Al₂O₃, Na₂O.11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂ (M is a rare earth element such as Nd, Gd, Dy, or the like) Li₅ZrP₃O₁₂, Li₅TiP₃O₁₂, Li₃Fe₂P₃O₁₂, Li₄NbP₃O₁₂, Li1₊ₓ(M,Al,Ga)ₓ(Ge_{1-y}Ti_{y})₂₋ₓ(PO₄)₃ (x≤0.8, 0≤y≤1.0, and M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BₐLa₂Ta₂O₁₂, Li₇La₃Zr₂O₁₂, Li₅La₃Nb₂O₁₂, Li₅La₃M₂O₁₂ (M is Nb, Ta), or Li₇₊ₓAₓLa₃₋ₓZr₂O₁₂ (0<x<3 and A is Zn).

The solid electrolyte may have a particle shape, and may have an average particle diameter (D50) of 5.0 µm or less, out 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

An amount of the solid electrolyte may be, based on the weight of the anode catalyst layer, 0.1 wt% to 35 wt%, and for example, 1 wt% to 35 wt%, 5 wt% to 30 wt%, 8 wt% to 25 wt%, or 10 wt% to 20 wt%.

Based on the total weight of the cathode active material layer, the solid electrolyte may be included in an amount of 0.1 wt% to 35 wt%, and for example, 1 wt% to 35 wt%, 5 wt% to 30 wt%, 8 wt% to 25 wt%, or 10 wt% to 20 wt%. Based on the total weight of the cathode active material and the solid electrolyte in the cathode active material layer, the cathode active material may be included in an amount of 65 wt% to 99 wt% and the solid electrolyte may be included in an amount of 1 wt% to 35 wt%, and in another embodiments, the cathode active material may be included in an amount of 80 wt% to 90 wt% and the solid electrolyte may be included in an amount of 10 wt% to 20 wt%. If the solid electrolyte is included in the cathode within the weight range, the cycle-life characteristics and efficiency of the all solid-state battery may be improved, without deteriorating the capacity.

The cathode active material layer may include a binder. The binder may improve binding properties of cathode active material particles with one another and with a current collector.

The binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, a vinylidene fluoride-hexafluoropropylene copolymer, polyethylene, polypropylene, a styrene butadiene rubber, an acrylated styrene butadiene rubber, polyacrylonitrile, an epoxy resin, nylon, poly(metha)acrylate, polymethyl(metha)acrylate, or the like, as non-limiting examples.

Among these, the binder according to some embodiments may be at least one selected from polyvinylidene fluoride, a vinylidene fluoride-hexafluoropropylene copolymer, polytetrafluoroethylene, a styrene butadiene rubber, polyacrylonitrile, or polymethyl(metha)acrylate.

Based on the total weight of each component of the cathode for the all solid-state battery, or the total weight of the cathode active material layer, the binder may be 0.1 wt% to 5 wt%, or 0.1 wt% to 3 wt%. In the range of amount, adhesion may be sufficiently secured without the deterioration of the battery performances.

The cathode active material layer may further include a conductive material. The conductive material may be included to provide electrode conductivity, and any electrically conductive material that does not cause a chemical change may be used as a conductive material. Examples of the conductive material may include a carbon-based material such as natural graphite, artificial graphite, carbon black, acetylene black, ketjen black, carbon fiber, carbon nanofiber, carbon nanotube and the like; a metal-based material of a metal powder or a metal fiber including; copper, nickel, aluminum, silver, and the like; material; a conductive polymer such as polyphenylene derivatives; or mixtures thereof.

The conductive material may be included at 0.1 wt% to 5 wt%, or 0.1 wt% to 3 wt% based on the total amounts of each component of the cathode for the all solid-state battery, or the total amounts of the cathode active material layer. The conductive material at the above range may improve the electrical conductivity without deteriorating battery performances.

The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

The electrolyte layer may include a solid electrolyte. The solid electrolyte may be an inorganic solid electrolyte such as a sulfide-based solid electrolyte, an oxide-based solid electrolyte, a halide-based solid electrolyte, and the like, or a solid polymer electrolyte.

The sulfide-based solid electrolyte, the oxide-based solid electrolyte and the solid polymer electrolyte are as described above.

The halide-based solid electrolyte may include an Li element, an M element (where M is a metal except for Li), and an X element (where X is a halogen). The X may be, for example, F, Cl, Br and I. In some embodiments, the halide-based solid electrolyte may include at least one of Br and Cl, as the X. The M may be, for example, a metal element such as Sc, Y, B, Al, Ga, In, and the like.

The composition of the halide-based solid electrolyte is not limited, but in some implementations, the halide-based solid electrolyte may be represented by Li₆₋₃ₐMₐBr_{b}Cl_{c} (where, M is metals, except for Li, 0<a<2, 0≤b≤6, 0≤c≤6, b+c=6). The a may be 0.75 or more, or 1 or more. in some implementations, the a may be 1.5 or less. The b may be 1 or more, or 2 or more. The c may be 3 or more, or 4 or more. The exemplary of the halide-based solid electrolyte may be Li₃YBr₆, Li₃YCl₆ or Li₃YBr₂Cl₄.

The solid electrolyte may have particle shapes and may have an average particle diameter (D50) of 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder in addition to a solid electrolyte. The binder may be a styrene butadiene rubber, polytetrafluoroethylene, polyvinylidene fluoride, polyethylene, an acrylate-based polymer, or a combination thereof, and may be any material that is generally used in the related art. The acrylate-based polymer may be, for example, butyl acrylate, polyacrylate, polymethacrylate, or combinations thereof.

The solid electrolyte layer may be prepared by adding the solid electrolyte to a binder solution, coating the binder solution onto a substrate film, and drying the binder solution. The binder solution may include isobutylyl isobutylate, xylene, toluene, benzene, hexane, or combinations thereof, or may be a compound represented by Chemical Formula 1 and/ or a compound represented by Chemical Formula 2. The solid electrolyte layer preparation is widely known in the art, so a detailed description thereof will not be repeated in the specification.

The solid electrolyte layer may have a thickness of 10 µm to 150 µm.

The solid electrolyte layer may further include an alkali metal salt, and/or an ionic liquid, and/or a conductive polymer.

The alkali metal salt may be, for example, a lithium salt. In the solid electrolyte layer, an amount of the lithium salt may be 1 M or more, for example, 1 M to 4 M. The lithium salt with the described amount may improve the lithium ion mobility of the solid electrolyte layer, thereby improving the ionic conductivity.

The lithium salt, may be, for example, LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato) borate (LiBOB), lithium oxalyldifluoro borate (LIODFB), lithium difluoro(oxalato)borate, (LiDFOB), lithium bis(trifluoro methanesulfonyl)imide, LiTFSI, LiN(SO₂CF₃)₂), lithium bis(fluorosulfonyl)imide, LiFSI, LiN(SO₂F)₂), LiCF₃SO₃, LiAsF₆, LiSbF₆, LiClO₄, or mixtures thereof.

The lithium salt may be imide-based, and for example, the imide-based lithium salt may be lithium bis(trifluoro methanesulfonyl)imide, LiTFSI, LiN(SO₂CF₃)₂), lithium bis(fluorosulfonyl)imide, LiFSI, or LiN(SO₂F)₂). The lithium salt may suitably maintain the chemical reactivity with the ionic liquid, and thus, the ionic conductivity may be maintained or improved.

The ionic liquid may have a melting point of room temperature or less. The ionic liquid may be in a liquid state at a room temperature with salts consisting of only ion, or a room-temperature molten salt.

The ionic liquid may be a compound including a) at least one cation selected from ammonium-based, pyrroleridinium-based, pyridinium-based, pyrrimidinuim-based, imidazolium-based, piperidinum-based, pyrazolium-based, oxazolium-based, pyridazium-based, phosphonium-based, sulfonium-based, triazolium-based, or a mixture thereof, and or more positive ion and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, CI-, Br, I⁻, BF₄⁻, SO₄⁻, CF₃SO₃⁻, (FSO2)2N-, (C₂F₅SO₂)₂N⁻, (C₂F₅SO₂)CF₃SO₂)N⁻, or (CF₃SO₂)₂N⁻.

The ionic liquid may be, for example, at least one selected from N-methyl-N-propylpyrroledinium bis(trifluoromethanesulfonyl)imide N-butyl-N-methylpyrroleridinium bis (3-trifluoromethylsulfonyl)imide, 1-butyl-3-methylimidazoleium bis(trifluoromethylsulfonyl)amide, 1-ethyl-3-methylimidazoleium, or bis(trifluoromethylsulfonyl)amide.

In the solid electrolyte layer, the weight ratio of the solid electrolyte and the ionic liquid may be 0.1:99.9 to 90:10, for example, 10:90 to 90:10, 20:80 to 90:10, 30:70 to 90:10, 40:60 to 90:10, or 50:50 to 90:10. The solid electrolyte layer within the range may have an improved electrochemical contact area to the electrode. Thus, the ionic conductivity may be maintained or improved. The improved electrochemical contact area may improve the energy density, discharge capacity, rate capability, or the like of the all solid-state battery.

The all solid-state battery according to some embodiments may be referred to as an all solid-state secondary battery, or an all solid-state lithium secondary battery.

If the all solid-state battery according to some embodiments is charged, lithium ions may be released from a cathode active material and may pass through the solid electrolyte to move to the anode, and thus, the lithium ions may be deposited to the anode current collector to form a lithium deposition layer. That is, the lithium deposition layer may be formed between the anode current collector and the anode active material layer.

The charging may include a formation process that can be performed at 0.05 C to 1 C at 25 °C to 50 °C once to three times.

The lithium deposition layer may have a thickness of 10 µm to 50 µm. For example, the thickness of the lithium deposition layer may be 10 µm or more, 20 µm or more, 30 µm or more, or 40 µm or more, and 50 µm or less, 40 µm less, 30 µm less, or 20 µm less. If the thickness of the lithium deposition layer is present within in the range, the lithium may be reversibly deposited during charge and discharge, thereby further improving the cycle-life characteristics.

In embodiments, the all solid-state battery may further include a buffer material for buffering a thickness variation caused by charging and discharging. The buffer material may be positioned between the anode and the case, or between the one assembly and another assembly of the battery in which at least one electrode assembly is stacked.

The buffer material may include materials having an elasticity recovery rate of 50 % or more and insulating properties. In another embodiment, the buffer material may be silicon rubber, acryl rubber, fluorine-based rubber, nylon, synthetic rubber, or combinations thereof. The buffer material may be a polymer sheet.

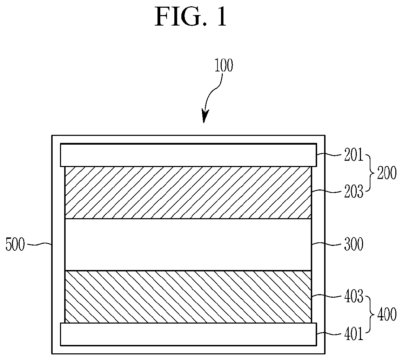

FIG. 1 is a cross-sectional view showing the all solid-state battery according to embodiments. Referring to FIG. 1, the all solid-state battery 100 may have a structure in which an electrode assembly is stacked with an anode 400 including an anode current collector 401 and an anode catalyst layer 403, a solid electrolyte layer 300, a cathode 200 including a cathode current collector 201 and a cathode active material layer 203 are housed on a case such as a pouch, or the like. The all solid-state battery 100 may further include an elasticity layer 500 on the outside of at least one of the cathode 200 and the anode 400. FIG. 1 shows one electrode assembly including an anode 400, the solid electrolyte layer 300, and a cathode 200. In some implementations, an all solid-state battery may be fabricated by stacking at least two electrode assembly.

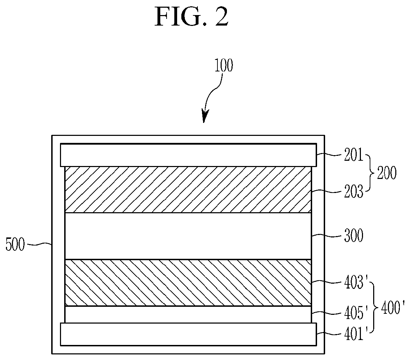

FIG. 2 schematically shows the structure of the all solid-state battery in the charge state. The all solid-state battery 100 may include a cathode 200 including a cathode current collector 201 and a cathode active material layer 203, an anode 400 including an anode current collector 401 and an anode catalyst layer 403. The solid electrolyte layer 300 may be positioned between the cathode 200 and the anode 400, and may include a battery case housing the battery.

As shown in FIG. 2, if the all solid-state battery 100 is charged, lithium ions may be released from a cathode active material and deposited on the anode current collector 401', thereby forming a lithium deposition layer 405' between the current collector 401' and the anode catalyst layer 403'.

### MODE FOR PERFORMING THE INVENTION

Hereinafter, examples of the present disclosure and comparative examples are described. These examples, however, are not in any sense to be interpreted as limiting the scope thereof.

### (Example 1)

### (1) Preparation of anode

8 wt% of a Li-carboxymethyl cellulose binder, 5 wt% or Ag nanoparticles (D50: 60nm), 86 wt% of carbon black, and 1 wt% of Nb₂O₅ were mixed in a water solvent to prepare an anode catalyst layer slurry. The carbon black was a mixture of single particles with a particle diameter of 38 nm and secondary particles, and the secondary particles had a particle diameter of 275 nm in which primary particles having a particle diameter of 76 nm were aggregated.

The slurry was coated onto a stainless steel foil current collector and vacuum-dried at 100 °C to prepare an anode having an anode catalyst layer with a 5 µm thickness and a current collector with a 10 µm thickness.

### (2) Preparation of cathode

85.00 wt% of a LiNi_{0.8}Co_{0.1}Al_{0.1}O₂ cathode active material, 13.5 wt% of an argyrodite-type solid electrolyte Li₆PS₅Cl, 0.5 wt% of a carbon nanotube conductive material, and 1.0 wt% of a polyvinylidene fluoride binder 1.0 wt% were mixed in an N-methyl pyrrolidone solvent to prepare a cathode active material layer slurry.

The cathode active material layer slurry was coated onto an aluminum current collector and dried at 60 °C followed by pressurizing to prepare a cathode for an all solid-state battery.

### (3) Preparation of solid electrolyte layer

To an argyrodite-type solid electrolyte Li₆PS₅Cl, a butyl acrylate binder solution (solid amount: 50 wt%) to which isobutylyl isobutylate as an acrylate-based polymer had been added, was added and mixed therewith. The mixing ratio of the solid electrolyte and the binder was prepared to be 98.7:1.3 by weight ratio.

The mixing was performed by using a Thinky mixer. 2 mm zirconia balls were added to the obtained mixture and were repeatedly mixed with the Thinky mixer to prepare a slurry. The slurry was cast onto a release polytetrafluoroethylene film and dried at room temperature to prepare a solid electrolyte layer with a thickness of 5 µm.

### (4) Preparation of all solid-state cell

The anode, the solid electrolyte and the cathode were sequentially stacked and a pressure of 2 Nm was applied thereto, thereby fabricating an all solid-state cell. In the cell, a thickness of the cathode active material layer or lithium (excepting for a current collector) was 100 µm to 150 µm, a thickness of the anode catalyst layer (excepting for a current collector) was 5 µm to 10 µm, and a thickness of the solid electrolyte layer was 100 µm.

### (Example 2)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 4 wt% of Ag nanoparticles (D50: 60nm), 85 wt% of carbon black, and 3 wt% of Nb₂O₅ were mixed in a water solvent to prepare an anode catalyst layer slurry.

Using the anode, the cathode and the solid electrolyte of Example 1, an all solid-state cell was fabricated by the same procedure as in Example 1.

### (Example 3)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 4 wt% of Ag nanoparticles (D50: 60nm), 83 wt% of carbon black, and 5 wt% of Nb₂O₅ were mixed in a water solvent to prepare an anode catalyst layer slurry.

Using the anode, the cathode, and the solid electrolyte of Example 1, an all solid-state cell was fabricated by the same procedure as in Example 1.

### (Example 4)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 4 wt% of Ag nanoparticles (D50: 60nm), 78 wt% of carbon black, and 10 wt% of Nb₂O₅ were mixed in a water solvent to prepare an anode catalyst layer slurry.

Using the anode, the cathode, and the solid electrolyte of Example 1, an all solid-state cell was fabricated by the same procedure as in Example 1.

### (Example 5)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 4 wt% of Ag nanoparticles (D50: 60nm), 64 wt% of carbon black, and 25 wt% of Nb₂O₅ were mixed in a water solvent to prepare an anode catalyst layer slurry.

Using the anode, the cathode, and the solid electrolyte of Example 1, an all solid-state cell was fabricated by the same procedure as in Example 1.

### (Example 6)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 3 wt% of Ag nanoparticles (D50: 60nm), 59 wt% of carbon black, and 30 wt% of Nb₂O₅ were mixed in a water solvent to prepare an anode catalyst layer slurry.

Using the anode, the cathode, and the solid electrolyte of Example 1, an all solid-state cell was fabricated by the same procedure as in Example 1.

### (Example 7)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 82 wt% of carbon black, and 10 wt% of Nb₂O₅ were mixed in a water solvent to prepare an anode catalyst layer slurry.

Using the anode, and the cathode and the solid electrolyte of Example 1, an all solid-state cell was fabricated by the same procedure as in Example 1.

### (Example 8)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 62 wt% of carbon black, and 30 wt% of Nb₂O₅ were mixed in a water solvent to prepare an anode catalyst layer slurry.

Using the anode, and the cathode and the solid electrolyte of Example 1, an all solid-state cell was fabricated by the same procedure as in Example 1.

### (Comparative Example 1)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 4.2 wt% of Ag nanoparticles (D50: 60nm), 87 wt% of carbon black, and 0.8 wt% of Nb₂O₅ were mixed in a water solvent to prepare an anode catalyst layer slurry.

Using the anode, the cathode, and the solid electrolyte of Example 1, an all solid-state cell was fabricated by the same procedure as in Example 1.

### (Comparative Example 2)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 3 wt% of Ag nanoparticles (D50: 60nm), 57 wt% of carbon black, and 32 wt% of Nb₂O₅ were mixed in a water solvent to prepare an anode catalyst layer slurry.

### (Comparative Example 3)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 2 wt% of Ag nanoparticles (D50: 60nm), 40 wt% of carbon black, and 50 wt% of Nb₂O₅ were mixed in a water solvent to prepare an anode catalyst layer slurry.

### (Comparative Example 4)

An anode was prepared by the same procedure as in Example 1, except that 8 wt% of a mixed binder of Li-carboxymethyl cellulose (Li-CMC) and a styrene butadiene rubber (SBR) (Li-CMC:SBR= 1:2 weight ratio), 60 wt% of carbon black, and 32 wt% of Nb₂O₅ were mixed in a water solvent to prepare an anode catalyst layer slurry.

### (Comparative Example 5)

An all solid-state battery was fabricated by the same procedure as in Example 1, except that the anode of Example 1 was used and a loading level was controlled in order to a N/P ratio of 0.09.

### (Comparative Example 6)

An all solid-state battery was fabricated by the same procedure as in Example 1, except that the anode of Example 1 was used and a loading level was controlled in order to a N/P ratio of 0.5.

### (Comparative Example 7)

An all solid-state battery was fabricated by the same procedure as in Example 1, except that the anode of Example 6 was used and a loading level was controlled in order to a N/P ratio of 0.09.

### (Comparative Example 8)

An all solid-state battery was fabricated by the same procedure as in Example 1, except that the anode of Example 6 was used and a loading level was controlled in order to a N/P ratio of 0.5.

### Experimental Example 1) Measurement of electrical resistance

The electrical resistances (sheet resistance) of the anodes according to Examples 1 to 8 and Comparative Examples 1 to 8 were probed with 46 pins via a 4-probe procedure (XF057, available from HIOKI, Co., Ltd.), and the results are shown in Table 2.

### Experimental Example 2) Measurement surface roughness

The surface roughness (Ra) of the anodes according to Examples 1 to 8 and Comparative Examples 1 to 8 were measured, and the results are shown in Table 2. The surface roughness is an average value obtained by summing absolute values of deviations from the reference surface to the measured surface, and i.e., values obtained by calculating the average of the absolute value of the differences between all points on the surface to the reference surface. The surface roughness was measured by using a 3D optical microscope (optical microscopy, available from Keyence, Co., Ltd.).

### Experimental Example 3) Evaluation of overvoltage

The all solid-state cells of Examples 1 to 8 and Comparative Examples 1 to 8 were charged at 0.05 C and the voltage drop started at OCV (open circuit voltage, about 2.5 V). Thereafter, the voltage up to the point where an inflection point occurred at around about 0 mV was measured. The results are shown in Table 2, as overvoltage.

### Experimental Example 4) Evaluation of initial efficiency

The all solid-state cells of Examples 1 to 8 and Comparative Examples 1 to 8 were charged and discharged at 0.05 C once to obtain a percentage value of discharge capacity to charge capacity. The results are shown in Table 2, as an initial efficiency.

### Experimental Example 5) Evaluation of power efficiency

The all solid-state cells of Examples 1 to 6 and Comparative Examples 1 to 4 were charged at 0.05 C and discharged at 0.1 C. The percentage value of the discharge capacity to the charge capacity was measured. The results are shown in Table 2, as power efficiency.

The composition of the anode catalyst layers of Examples 1 to 8 and Comparative Examples 1 to 4 are summarized in Table 1.

The N/P ratios of the all solid-state cells are shown in Table 1. The N/P ratio was obtained from a ratio of a capacity of the anode catalyst layer relative to a capacity (theoretical capacity) of the cathode, and the theoretical capacity of the anode catalyst layer was obtained by charging a half-cell at 0.05 C once and measuring a capacity to the inflection point near 0 mV (vs. Li).

**Table 1**

| | Binder (wt%) | Carbon black (wt%) | Ag(wt%) | Nb₂O₅(wt%) | N/P ratio |
|---|---|---|---|---|---|
| Example 1 | 8 | 86 | 5 | 1 | 0.15 |
| Example 2 | 8 | 85 | 4 | 3 | 0.14 |
| Example 3 | 8 | 83 | 4 | 5 | 0.16 |
| Example 4 | 8 | 78 | 4 | 10 | 0.17 |
| Example 5 | 8 | 64 | 3 | 25 | 0.12 |
| Example 6 | 8 | 59 | 3 | 30 | 0.12 |
| Example 7 | 8 | 82 | 0 | 10 | 0.12 |
| Example 8 | 8 | 62 | 0 | 30 | 0.11 |
| Comparative Example 1 | 8 | 87 | 4.2 | 0.8 | 0.15 |
| Comparative Example 2 | 8 | 57 | 3 | 32 | 0.13 |
| Comparative Example 3 | 8 | 40 | 2 | 50 | 0.12 |
| Comparative Example 4 | 8 | 60 | 0 | 32 | 0.12 |
| Comparative Example 5 | 8 | 86 | 5 | 1 | 0.09 |
| Comparative Example 6 | 8 | 86 | 5 | 1 | 0.5 |
| Comparative Example 7 | 8 | 59 | 3 | 30 | 0.09 |
| Comparative Example 8 | 8 | 59 | 3 | 30 | 0.5 |

**Table 2**

| | Electrode characteristic | | Electrochemical performance | | |
|---|---|---|---|---|---|
| | Electrical resistance (10⁻² Ωcm) | Surface roughness (µm) | Overvoltage (mV) | Initial efficiency (%) | Power efficiency (%) |
| Example 1 | 5.11 | 0.30 | 14.2 | 86.3 | 94.4 |
| Example 2 | 5.14 | 0.30 | 14.2 | 86.2 | 94.2 |
| Example 3 | 5.23 | 0.32 | 13.7 | 88.7 | 94.8 |
| Example 4 | 5.42 | 0.36 | 13.3 | 88.2 | 96.5 |
| Example 5 | 6.03 | 0.45 | 13.8 | 88.3 | 96.5 |
| Example 6 | 6.21 | 0.44 | 13.8 | 86.6 | 94.9 |
| Example 7 | 5.63 | 0.37 | 14.8 | 88.0 | 95.8 |
| Example 8 | 6.25 | 0.48 | 15.8 | 86.0 | 94.2 |
| Comparative Example 1 | 5.10 | 0.29 | 14.3 | 85.9 | Short-circuit |
| Comparative Example 2 | 6.50 | 0.52 | 15.6 | 84.2 | Short-circuit |
| Comparative Example 3 | 7.10 | 0.59 | 18.6 | 83.1 | Short-circuit |
| Comparative Example 4 | 6.58 | 0.53 | 16.5 | 83.9 | Short-circuit |
| Comparative Example 5 | 5.33 | 0.42 | 13.5 | 85.9 | 87.9 |
| Comparative Example 6 | -(Unmeasurable) | 0.89 | 20.1 | 52.3 | Short-circuit |
| Comparative Example 7 | 6.06 | 0.44 | 14.9 | 84.7 | 87.2 |
| Comparative Example 8 | -(Unmeasurable) | 0.99 | 24.0 | 57.8 | Short-circuit |

As shown in Table 2, Examples 1 to 8 in which the anode catalyst layer included Nb₂O₅ at 1 wt% to 30 wt%, and the N/P ratio was 0.1 or more, and less than 0.5 exhibited low electrical resistance and surface roughness, low overvoltage, and excellent initial efficiency and power efficiency.

On the other hand, in case of Comparative example 1 including a very small amount of Nb₂O₅, initial efficiency was deteriorated and a short-circuit occurred.

Comparative Example 2 using Nb₂O₅ at 32 wt% exhibited an increased electrical resistance and surface roughness, increases in overvoltage, and deteriorated initial efficiency. In case of Comparative Example 3 if an excessive amount of Nb₂O₅ at a 50 wt% was used, the electrical resistance and surface roughness were significantly increased, the initial efficiency was greatly deteriorated, and a short-circuit occurred. Comparative Example 4 using no Ag exhibited high battery resistance, surface roughness, low overvoltage, low initial efficiency, and a short-circuit.

Even if in Comparative Examples 5 and 7 having the N/P ratio of less than 0.1, and Nb₂O₅ was used at an amount of 1 wt% and 30 wt%, slightly low initial efficiency and the deteriorated power efficiency were exhibited. Even if in Comparative Examples 6 and 8 having the N/P ratio of 0.5 or more, Nb₂O₅ was used at an amount of 1 wt% and 30 wt%, the resistance was too high to be measurable, the extreme deteriorated initial efficiency was exhibited, and a short-circuit occurred.

### Experimental Example 6) SEM image and EDAX

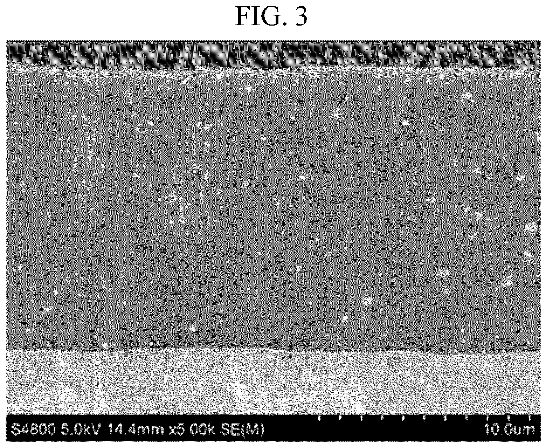

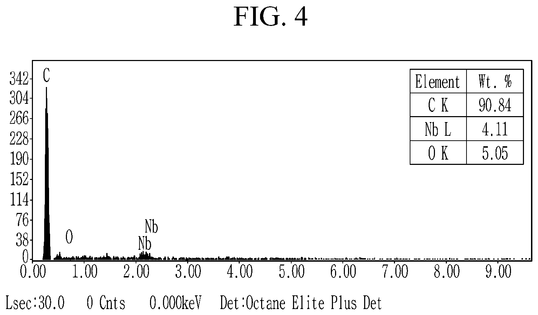

The anode according to Example 1 was cross-polished to flatten one surface thereof. The surface SEM image for the obtained anode is shown in FIG. 3. The EDAX result for the anode is shown in FIG. 4.

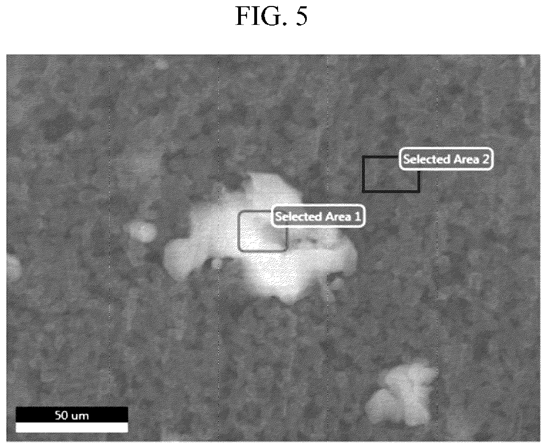

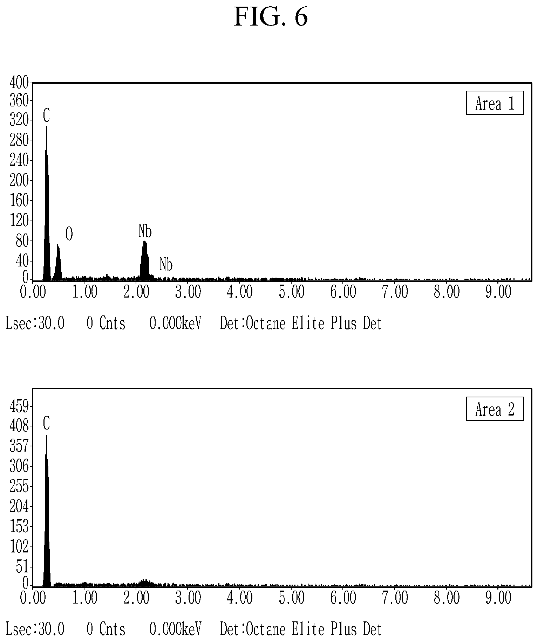

The SEM image from FIG. 3 has been enlarged 20,000 times and is shown in FIG. 5. The EDAX results for the selected area 1 and the selected area 2 in FIG. 5 were shown in FIG. 6.

From the EDAX results of FIG. 4, it may be seen that Nb₂O₅ was present on the anode of Example 1.

In the SEM image shown in FIG. 3, the bright colored dot indicated as Nb₂O₅, which was clearly shown from FIG. 6 showing the EDAX results in which the presence of C, O, and Nb peaks was in the selected area 1 of FIG. 5, while the only C peak was in the selected area 2 of FIG. 5.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An all solid-state battery, comprising:
a cathode comprising a cathode active material layer including a cathode active material;
an anode catalyst layer including an anode catalyst and Nb₂O₅; and
an electrolyte layer,
wherein an amount of Nb₂O₅ is 1 wt% to 30 wt% based on 100 wt% of the anode catalyst layer, and
wherein a ratio (N/P) of a capacity of the anode catalyst layer relative to a capacity of the cathode is 0.1 or more and less than 0.5.

2. The all solid-state battery as claimed in claim 1, wherein the amount of Nb₂O₅ is 3 wt% to 30 wt% based on the total, 100 wt% of the anode catalyst layer.

3. The all solid-state battery as claimed in claim 1, wherein the amount of Nb₂O₅ is 5 wt% to 15 wt% based on the total, 100 wt% of the anode catalyst layer.

4. The all solid-state battery as claimed in claim 1, wherein the ratio (N/P) of the capacity of the anode catalyst layer relative to the capacity of the cathode is 0.1 to 0.4.

5. The all solid-state battery as claimed in claim 1, wherein the ratio (N/P) of the capacity of the anode catalyst layer relative to the capacity of the cathode is 0.1 to 0.3.

6. The all solid-state battery as claimed in claim 1, wherein the anode catalyst is a carbon-based material, metal particles, or combinations thereof.

7. The all solid-state battery as claimed in claim 6, wherein the carbon-based material is an amorphous carbon.

8. The all solid-state battery as claimed in claim 6, wherein the metal particles comprise at least one selected from Ag, Zn, Al, Sn, Mg, Ge, Cu, In, Ni, Bi, Au, Si, Pt, Pd, and combinations thereof.

9. The all solid-state battery as claimed in claim 1, wherein the electrolyte layer comprises a solid electrolyte.

10. The all solid-state battery as claimed in claim 9, wherein the solid electrolyte is a sulfide-based solid electrolyte, an oxide-based solid electrolyte, a halide-based solid electrolyte, or a solid polymer electrolyte.

11. The all solid-state battery as claimed in claim 1, wherein the anode further comprises a current collector supporting the anode catalyst layer, and
a lithium deposition layer formed between the current collector and the anode catalyst layer during an initial charging.

12. The all solid-state battery as claimed in claim 1, wherein the cathode active material is an active material being capable of reversibly intercalating and deintercalating lithium ions or a sulfur-based compound.

13. The all solid-state battery as claimed in claim 12, wherein the cathode active material is the active material being capable of reversibly intercalating and deintercalating lithium ions.
